# EUROPÄISCHE PATENTANMELDUNG

(11) **EP 1 679 761 A1**
(43) Veröffentlichungstag der Anmeldung: **12.07.2006**
(21) Anmeldenummer: 05000255.9
(22) Anmeldetag: 07.01.2005
(51) Int. Cl.: H01Q 9/04, H01Q 9/16, H01Q 9/30, H04B 5/06

(54) **Antenne für eine mobile Sende- und/ oder Empfangseinrichtung**

(71) Anmelder: Success Chip Ltd., c/o Offshore Incorporations Ltd., P.O. Box 957, Offshore Incorporations Center, Tortola (VG)
(72) Erfinder: Lenkeit, Marc, 47877 Willich (DE); Hamm, Dirk, 47877 Willich (DE)
(74) Vertreter: Englaender, Klaus

(57) **Zusammenfassung**

Die Erfindung betrifft eine Antenne für eine mobile Sende- und/oder Empfangseinrichtung, insbesondere für einen Handsende/-empfänger für ein drahtloses Mikrophon, mit einem Monopol- bzw. Dipol-Anthennenelement (12). Erfindungsgemäß ist ein zusätzliches Antennenelement (13) zur Anregung einer Parallelplattenleitungsmode vorgesehen.

## Beschreibung

Die Erfindung betrifft eine Antenne für eine mobile Sende- und/oder Empfangseinrichtung, insbesondere für einen Handsende/-empfänger für ein drahtloses Mikrophon, mit einem Monopol- bzw. Dipol-Antennenelement.

Eine Vielzahl unterschiedlicher Antennenkonzepte ist für mobile Sende/Empfangseinrichtungen bekannt. Bedingt durch die limitiert zur Verfügung stehende Energie (Batterien) ist Ziel dieser Antennenkonzepte die Maximierung der Abstrahleffizienz bei gleichzeitig minimal nötigem Platzbedarf der Antenne beziehungsweise einem dem Gerät optimal angepassten Formfaktor. Beispiele derartiger Antennenkonzepte sind Helix, Inverted-L bzw. Inverted-F-Antennen aber auch Dipol- bzw. Monopol- Antennen. Letztere bilden häufig dadurch einen Dipol, dass ein erster Arm der Antenne durch einen elektrischen Leiter (z.B. ein Verbindungsstück zwischen dem Gehäuse und der Leiterplatte und einem Griffstück der mobilen Sende- und/oder Empfangseinrichtung) gebildet ist (Monopol), und dass ein zweiter Arm durch ein virtuelles elektrisches Spiegelbild invertierter Polarität des ersten Arms (der Monopolantenne) in einer oder mehreren elektrischen Bezugsebenen (z.B. der Masse- Ebene(n) in einer Leiterplatte bzw. in Leiterplatten, welche außerdem die Elektronik beherbergen kann bzw. können), gebildet ist. Diese Leiterplatten liegen beispielsweise zum einen auf derselben Achse wie das Griffstück und zum anderen senkrecht zum Gehäuse-Verbindungsstück und legen dadurch einen wesentlichen Teil der Monopolantenne fest. Der Einspeisepunkt der Antenne liegt bei dieser Konfiguration zwischen Griffstück und Leiterplatte im Verbindungsstück.

Der Erfindung liegt die Aufgabe zugrunde, eine Antenne der eingangs genannten Art mit verbessertem Antennenwirkungsgrad zu schaffen. Dabei soll eine möglichst isotrope Strahlungsverteilung sowie eine gute Anpassung über eine große Bandbreite gewährleistet sein. Ferner soll die Erfindung im Falle einer Berührung des Griffstückes durch den Benutzer den Einfluss auf Antennenparameter minimieren.

Gelöst wird die Aufgabe durch die Merkmale des Anspruchs 1. Weitere Vorteile des erfindungsgemäßen Antennenkonzepts sind in den Unteransprüchen angegeben.

Nach dem Grundgedanken der Erfindung wird eine entscheidende Verbesserung des Antennenwirkungsgrads der Antenne mit Dipol- bzw. Monopolelement durch Einsatz eines zusätzlichen Antennenelements mit Anregung einer ausbreitungsfähigen Parallelplattenleitungsmode erreicht.

Das zusätzliche Antennenelement umfasst bevorzugt zwei zueinander parallele, voneinander beabstandete leitfähige Elemente sowie ein Einkoppelelement. Die Nutzsignaleinspeisung erfolgt bevorzugt über einen Einspeisepunkt an einem Ende des Elementpaares.

Bevorzugt ist eine leitende Verbindung zwischen den beiden parallelen Elementen des zusätzlichen Antennenelements z.B. in Gestalt von Abstandshaltern vorgesehen, welche an der vom Einspeisepunkt abgewandten Seite um etwa eine viertel Wellenlänge des eingespeisten Signals beabstandet ist. Eine Einstellbarkeit der Anpassung zwischen Antenne und Einspeiselektronik lässt sich dabei vorteilhafterweise durch Variieren des Abstandes der leitenden Verbindung zum Einspeisepunkt erreichen.

Eine zusätzliche Abstrahlung des Nutzsignals lässt sich erfindungsgemäß erzielen, indem die leitende Verbindung, welche die beiden parallelen Antennenelemente kurzschließt, so zum Einspeisepunkt beabstandet ist, , dass hierdurch vor- und rücklaufende Welle in der Umgebung des Einspeisepunktes/Koppelelementes sich konstruktiv überlagern und somit eine hohe Feldstärke erzeugen. Diese zusätzliche Signalabstrahlung ist außerdem -bedingt durch die örtliche Trennung zwischen Griffstück und Entstehung der Felder- lediglich vernachlässigbarer Beeinflussung durch die Hand eines Nutzers einer mobilen Sendeund/oder Empfangseinrichtung ausgesetzt, die mit dem erfindungsgemäßen Antennenkonzept ausgerüstet ist.

Die beiden Platten-Elemente des zusätzlichen Antennenelements umfassen in einer besonders praxisgerechten und einfach realisierbaren bevorzugten Ausführungsform Leiterplatten mit zumindest einer Metallisierungsschicht, die bevorzugt eine durchgehende Schicht bildet. Zumindest eine dieser Leitungsplatten kann von der Leiterplatte gebildet sein, welche die Bauelemente für die Sende- und/oder Empfangseinrichtung trägt.

Alternativ zu dieser Ausführungsform mit zwei parallelen Platten kann das zusätzliche Antennenelement zur Anregung einer Parallelplattenleitungsmode einen leitenden Bestandteil des Gehäuses bzw. ein Abdeckblech eines Handsenders/-empfängers umfassen, der bzw. das die Funktion von zumindest einer der beiden parallelen Platten erfüllt.

Gemäß einer weiteren bevorzugten Ausführungsform, bei der diese Plattenelemente gleichzeitig Teil der Parallelplattenleitung und Teil eines Monopols bilden, so dass beide Antennentypen vorliegen und gleichzeitig abstrahlen, können die beiden Elemente des zusätzlichen Antennenelements einen Teil eines Monopol-Antennenelements darstellen, wobei der Arm der Monopolantenne durch ein Verbindungsstück zwischen dem Gehäuse und einer Schaltkarte mit Bauteilen der mobilen Sende- und/oder Empfangseinrichtung und einem sich an das Gehäuse anschließenden leitenden Griffstück verwirklicht ist, während das dazugehörige virtuelle elektrisches Spiegelbild invertierter Polarität des ersten Armes mittels einer oder beider Leiterplatte(n) mit zumindest einer Metallisierungsschicht gebildet ist.

Gemäß einem wesentlichen Aspekt der Erfindung ist zur Optimierung des Wirkungsgrads der erfindungsgemäßen Antenne eine Einkoppeleinrichtung vorgesehen, welche aufgrund ihrer Geometrie die gleichzeitige Anregung der Monopolmode bzw. der Dipolmode sowie der Parallelplattenleitungsmode ermöglicht.

Um bei einem sich bewegenden Benutzer die Störsicherheit zu erhöhen, wird vorteilhafterweise durch gesteuerte Überlagerung der elektrischen Felder des Monopols bzw. Dipols und des zusätzlichen Antennenelements zur Anregung einer Parallelplattenleitungsmode eine einem isotropen Strahler möglichst nahekommende Abstrahlcharakteristik erzeugt.

Nachfolgend wird die Erfindung anhand der Zeichnung beispielhaft näher erläutert; in dieser zeigen:
- Fig.1: eine Ausführungsform der erfindungsgemäßen Antenne als Bestandteil eines Handsende/-empfängers für ein drahtloses Mikrophon, dessen Gehäuse im Bereich der Antenne nicht dargestellt ist,
- Fig. 2: eine Seitenansicht der Anordnung von Fig. 1 unter schematischer Darstellung der simultan erzeugten Parallelplattenleitungsmode- und der Feldverteilung des Mono-bzw. Dipols der Antenne,
- Fig. 3: die elektrische Feldverteilung der Antenne von Fig. 1 in der in Fig. 2 bezeichneten ZX-Ebene,
- Fig. 4: die elektrische Feldverteilung der Antenne von Fig. 1 in der in Fig. 2 bezeichneten ZY-Ebene,
- Fig. 5: Antennencharakteristiken der Antenne von Fig. 1,
- Fig. 6: die Anpassungskenlinie der Antenne von Fig. 1,
- Fig. 7: die Stromverteilung in der Masseebene der Antenne von Fig. 1,
- Fig.8: die Feldverteilung der Antenne von Fig. 1 bei simultaner Anregung der Parallelplatten- und Monopolmoden, und
- Fig. 9: die Feldverteilung der Antenne von Fig. 1 bei kurzgeschlossener Parallelplattenleitung.

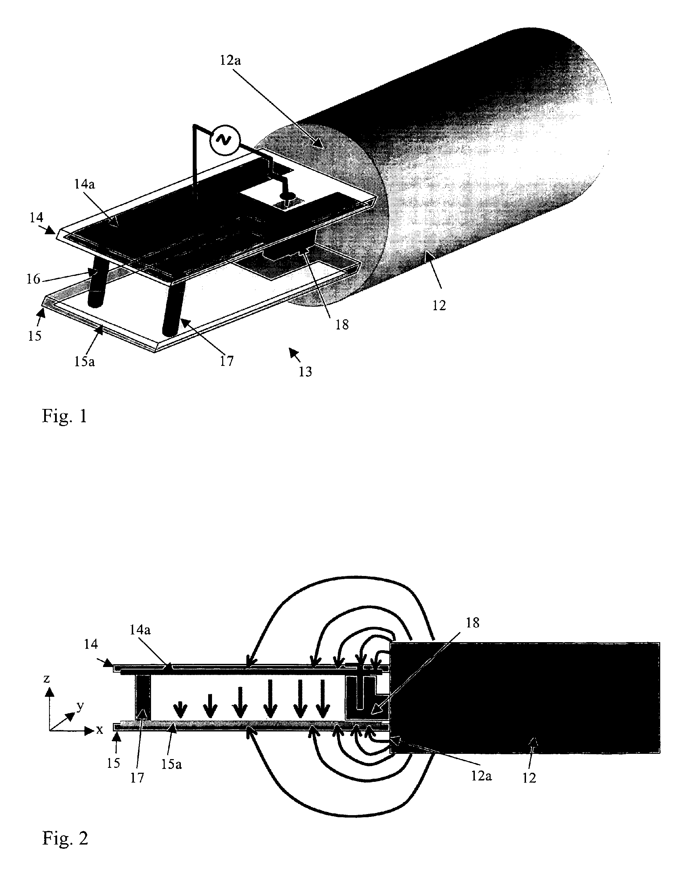

In Fig. 1 ist ein Sockel 10 eines handgehaltenen drahtlosen Mikrophons mit offenem bzw. freigeschnittenem Sockelende 11 und sich daran anschließendem, leitfähigen Griffstück 12 gezeigt, das einen Teil eines Monopol-Antennenelements bildet. Sockel 10 und Griffstück 12 bilden einen Teil des Mikrophongehäuses. Im Sockelende 11 befindet sich ein Parallelplattenleitungsantennenelement 13, das an einer geschlossenen Stirnseite 12a des zylindrischen Griffstücks 12 am Koppelelement 18 befestigt ist.

In dem Ausführungsbeispiel der erfindungsgemäßen Antenne von Fig. 1 kommen zwei gegenseitig beabstandete, zueinander parallele Leiterplatten 14 und 15 als Parallelplattenleitungsantennenelement 13 zum Einsatz, das in der Antenne zusätzlich bzw. simultan zu dem Monopolantennenelement verwendet wird. Die Leiterplatten 14, 15 sind am griffstückfemen Ende mittels rohrförmiger Abstandhalter 16, 17 und am Griffstück 12 mittels einer Einkoppeleinrichtung 18 auf Abstand gehalten. Die Leiterplatten 14, 15 weisen jeweils eine bevorzugt durchgehende Metallisierung 14a, 15a in Gestalt mindestens einer Lage (z.B. der GND- bzw. Masse-Lage) auf. Die beiden Abstandhalter 16, 17 bestehen aus leitfähigem Material und stehen im Kontakt mit den Metallisierungslagen 14a, 15a. Dadurch sind die beiden Metallisierungslagen 14a, 15a am griffstückfemen Ende der Leitungsplatten 14, 15 elektrisch verbunden. Durch geeignete Einspeisung des abzustrahlenden Nutzsignals in das Koppelelement 18 und damit in die Stirnseite 12a des Griffstücks 12, wird zusätzlich zu dem mittels Griffstück 12 und Parallelplattenleitungsantennenelement 13 erregten Monopolfeld eine Parallelplattenleitungsmode zwischen den Leiterplatten 14, 15 angeregt. Diese Parallelplattenleitungsmode ist durch einen elektrischen Feldverlauf gekennzeichnet, der in Fig. 2 mit zwischen den Leitungsplatten 14, 15, senkrecht zu diesen verlaufenden Pfeilen gekennzeichnet ist. Das elektrische Feld dieser ausbreitungsfähigen Mode breitet sich vom Einspeisepunkt an der Einkoppeleinrichtung 18 bis zum gegenüberliegenden griffstückfemen Ende des Leiterplattenpaares 14, 15 aus. Der elektrische Feldverlauf des Monopols ist in Fig. 2 mit gekrümmten Pfeilen bezeichnet, die vom Griffstückende ausgehen und auf dem Leiterplattenpaar 14, 15 enden.

Mithilfe der zusätzlich zum Monopol angeregten Parallelplattenleitungsmode wird eine gute Ankopplung sowie eine sehr gute Abstrahleffizienz bzw. ein sehr guter Abstrahlwirkungsgrad der Antennenanordnung gemäß Fig. 1 und 2 von typischerweise mehr als 90% in der Simulation erreicht.

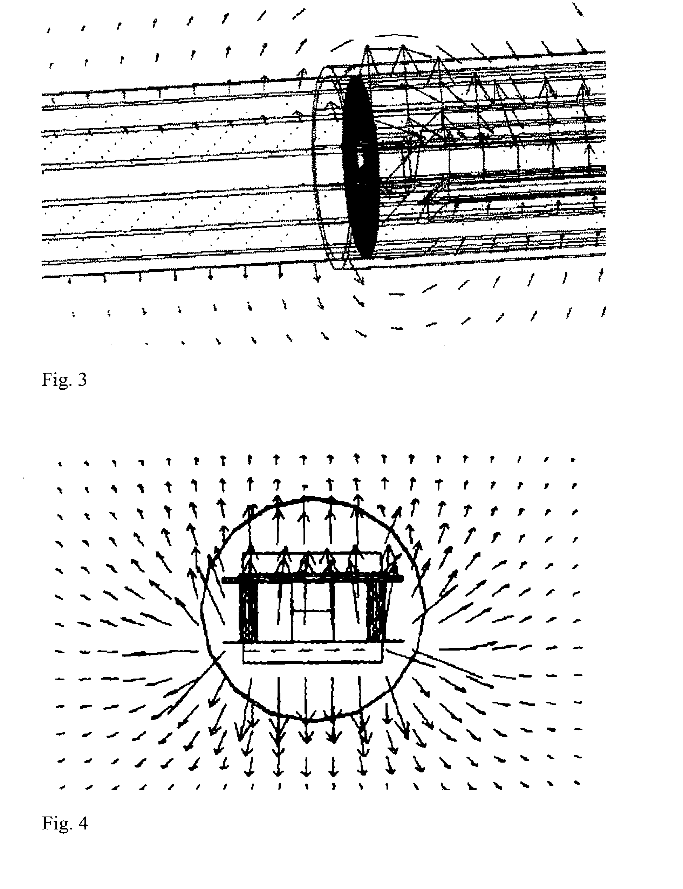

Die elektrische Feldverteilung in der Zeichnungsebene von Fig. 2 geht aus Fig. 3 hervor und diejenige in der Radialebene bezogen auf das zylindrische Griffstück 12 geht aus Fig. 4 hervor, wo die Länge der die Feldlinien verkörpernden Pfeile ein Maß für die jeweilige lokale Feldstärke ist.

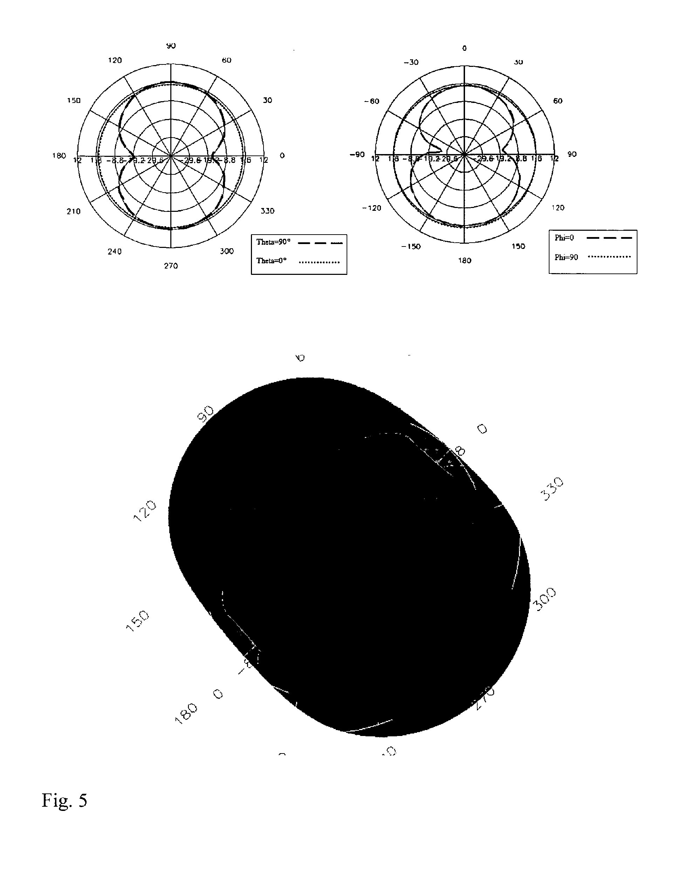

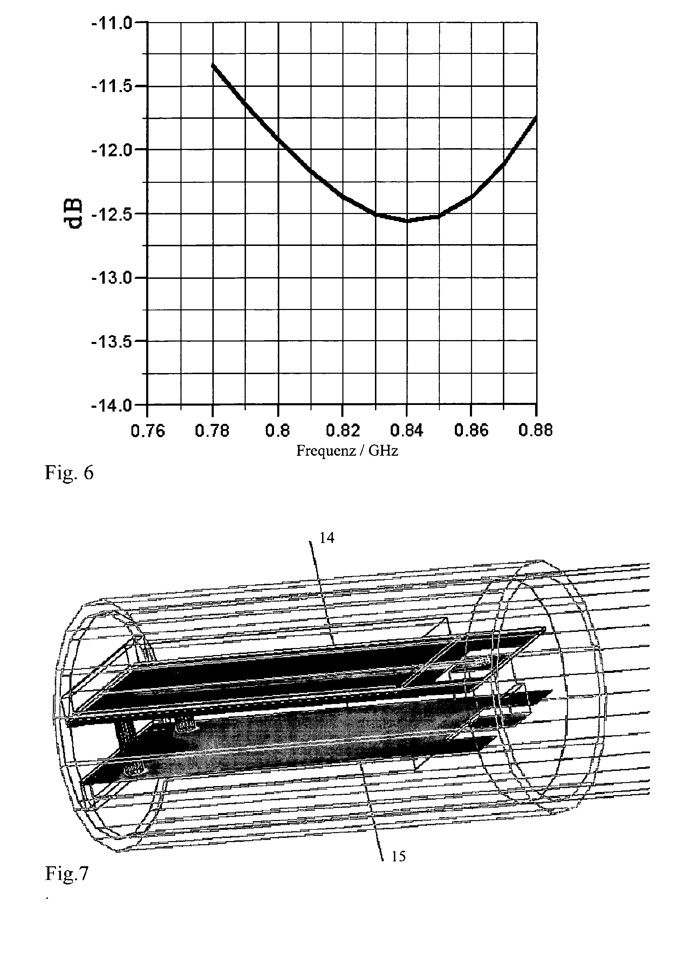

Die Antennencharakteristiken der Antennenanordnung von Fig. 1 und 2 gehen aus Fig. 5 hervor. Demnach ist das elektrische Feld auf alle Richtungen senkrecht zur X-Achse gleichmäßig verteilt. In der in Fig. 5 gezeigten Ebene wird eine perfekte Rundstrahlcharakteristik erreicht. Eine niedrige Direktivität von ca. 3,4 dB unterstreicht diese Tatsache. In beide Richtungen der X-Achse sind Feldeinbrüche zu erkennen, welche aber aufgrund der dem Kopf der auf den Nutzer zu weisenden Richtung nicht unerwünscht sind. Ferner erweist sich diese Stromverteilung innerhalb der Grund- bzw. Masseebene als sehr homogen, wie aus Fig. 7 hervorgeht, was mit einem niedrigen SAR-Wert (SAR steht für Specific Absorption) einher geht.

Im Ausführungsbeispiel der erfindungsgemäßen Antenne gemäß Fig. 1 und 2 sind die Leiterplatten 14, 15 als Leiterplatten gestaltet, welche die nicht gezeigten Bauteile der Schaltung zur Gewinnung und Aufbereitung des Sendesignals bzw. des Nutzsignals umfassen. Wie vorstehend ausgeführt, sind die beiden Leiterplatten 14, 15 gegenseitig beabstandet angeordnet. Über die beiden leitend ausgebildeten Abstandshalter 16, 17 sind die Masselagen 14a und 15a elektrisch verbunden, wobei diese Abstandshalter einen Kurzschluss der Parallelplattenleitung darstellen. Dieser Kurzschluss bedingt die Ausbildung einer stehenden Welle innerhalb der Parallelplattenleitung mit einem Minimum im Bereich der Abstandhalter 16, 17 und einem Maximum im Bereich der Einspeisung/Koppelelement. Dort entsteht auf Grund der erfindungsgemäß angestrebten, konstruktiven Überlagerung von vor-und rücklaufender Welle ein starkes elektrisches Feld (Fig. 3 und 4), welches zu einer Verbesserung der Abstrahlung des vorstehend beschriebenen Monopols führt. Wie das Beispiel zeigt, kann mittels Veränderung des Abstands der Abstandhalter 16, 17 zum Einspeisepunkt eine Optimierung der breitbandigen Anpassung (Fig. 6) erfolgen.

Bedingt durch die örtliche Lage der Feldüberhöhung deutlich vor dem Griffstück 12, ist der Einfluss der Hand eines dort angreifenden Nutzers sehr klein, da dadurch im wesentlichen nur das Feld des Monopols beeinflusst wird.

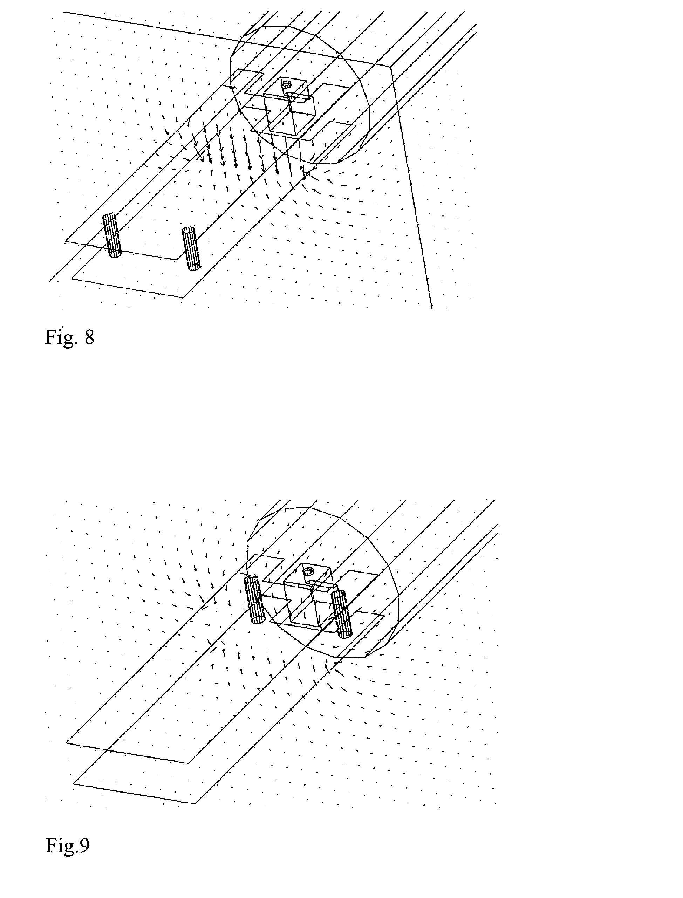

Fig. 8 zeigt die mit der Antennenanordnung von Fig. 1 und 2 erzielte Feldverteilung bei Anregung der Parallelplattenleitungsmode und der Monopolmode mit einem Kurzschluss im Abstand eine viertel Wellenlänge.

Im Vergleich hierzu zeigt Fig. 9 die Feldverteilung unter ausschließlicher Anregung der Monopolmode, die beim Stand der Technik ohne Erregung der Parallelplattenleitungsmode beobachtet wird anhand der Antennenanordnung von Fig. 1 und 2 mit eingangsseitig "kurzgeschlossener" Parallelplattenleitung durch Anordnung der Abstandhalter in höhe des Einspeisepunktes.

## Patentansprüche

1. Antenne für eine mobile Sende- und/oder Empfangseinrichtung, insbesondere für einen Handsende/-empfänger für ein drahtloses Mikrophon, mit einem Monopol- bzw. Dipol-Antennenelement (12) zur Anregung einer Monopols bzw. Dipols, **gekennzeichnet durch** ein zusätzliches Antennenelement (13) zur Anregung einer Parallelplattenleitungsmode.

2. Antenne nach Anspruch 1, **dadurch gekennzeichnet, dass** das zusätzliche Antennenelement (13) zwei zueinander parallele, voneinander beabstandete leitfähige Elemente (14+14a, 15+15a) umfasst.

3. Antenne nach Anspruch 1 oder 2, **gekennzeichnet durch** einen Einkoppelelement (18) an einem Ende des Elementpaares (14, 15).

4. Antenne nach Anspruch 3, **dadurch gekennzeichnet, dass** eine leitende Verbindung (16, 17) zwischen den beiden parallelen Elementen (14, 15) des zusätzlichen Antennenelements (13) vorgesehen ist, welche an der vom Einspeisepunkt abgewandten Seite um etwa eine viertel Wellenlänge des eingespeisten Signals beabstandet ist und die Lagen 14a und 15a elektrisch miteinander verbindet.

5. Antenne nach Anspruch 4, **gekennzeichnet durch** eine Einstellbarkeit der Anpassung zwischen Antenne und Einspeiseelektronik **durch** Variieren des Abstandes der leitenden Verbindung (16, 17) zum Einspeisepunkt (18).

6. Antenne nach Anspruch 4 oder 5, **dadurch gekennzeichnet, dass** die leitende Verbindung (16, 17) die durch die beiden parallelen Elemente gebildete Parallelplattenleitung kurzschließt und bedingt durch die konstruktive Überlagerung von vor- und rücklaufender Welle eine hohe Feldstärke in der Umgebung des Einkoppelelementes (18) zugunsten einer zusätzlichen Signalabstrahlung erzeugt.

7. Antenne nach einem der Ansprüche 2 bis 6, **dadurch gekennzeichnet, dass** die beiden Elemente (14, 15) des zusätzlichen Antennenelements (13) zwei Leiterplatten mit zumindest einer Metallisierungsschicht (14a, 15a) sind.

8. Antenne nach Anspruch 7, **dadurch gekennzeichnet, dass** die Metallisierungsschicht (14a, 15a) eine möglichst durchgehende Schicht bildet.

9. Antenne nach einem der Ansprüche 1 bis 7 als Bestandteil eines Handsenders/-empfängers, der ein Gehäuse umfasst, **dadurch gekennzeichnet, dass** zumindest eines der beiden Elemente des zusätzlichen Antennenelements (13) einen leitenden Bestandteil des Gehäuses umfasst.

10. Antenne nach Anspruch 9, **dadurch gekennzeichnet, dass** mindestens eines der beiden Elemente des zusätzlichen Antennenelements (13) Teil eines Monopol-Antennenelements ist, wobei ein erster Arm der Monopolantenne durch ein Verbindungsstück zwischen dem Gehäuse und einer Schaltkarte mit Bauteilen der mobilen Sende- und/oder Empfangseinrichtung und einem sich an das Gehäuse anschließenden leitenden Griffstück verwirklicht ist, während das zugehörige virtuelle elektrisches Spiegelbild invertierter Polarität des ersten Armes durch mindestens eine Leiterplatte mit zumindest einer Metallisierungsschicht gebildet ist.

11. Antenne nach einem der Ansprüche 1 bis 10 als Bestandteil eines Handsenders/-empfängers, der ein Abschirmblech umfasst, **dadurch gekennzeichnet, dass** zumindest eines der beiden Elemente des zusätzlichen Antennenelements (13) das Abschirmblech umfasst.

12. Antenne nach einem der Ansprüche 1 bis 11, **dadurch gekennzeichnet, dass** eine Einkoppeleinrichtung vorgesehen ist, welche aufgrund ihrer Geometrie die gleichzeitige Anregung der Monopolmode bzw. der Dipolmode sowie der Parallelplattenleitungsmode ermöglicht.

13. Antenne nach Anspruch 12, **dadurch gekennzeichnet, dass** die Einkoppeleinrichtung eine Zylindergrundfläche mit einem daran angrenzenden quaderförmigen Block zur Befestigung an den Leiterplatten ist.

14. Antenne nach Anspruch 13, **dadurch gekennzeichnet, dass** zwischen Block und Zylindergrundfläche zur Optimierung der Anpassung ein Schlitz belassen ist.

15. Antenne, nach einem der Ansprüche 1 bis 14, **dadurch gekennzeichnet, dass** durch gesteuerte Überlagerung der elektrischen Felder des Monopols (12) bzw. Dipols und des zusätzlichen Antennenelements (13) zur Anregung einer Parallelplattenleitungsmode eine dem isotropen Strahler möglichst nahekommende Abstrahlcharakteristik erzeugt wird.
